(19) **Europäisches Patentamt / European Patent Office / Office européen des brevets**

(11) **EP 3 842 750 A2**

(12) **EUROPEAN PATENT APPLICATION**

(43) Date of publication:
30.06.2021 Bulletin 2021/26

(21) Application number: 21164268.1

(22) Date of filing: 23.03.2021

(51) Int Cl.:
*G01C 21/28* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 09.07.2020 CN 202010655526

(71) Applicant: BEIJING BAIDU NETCOM SCIENCE
TECHNOLOGY CO., LTD.
No.10 Shangdi 10th Street
Haidian District
Beijing 100085 (CN)

(72) Inventors:
• CHENG, Feng
Beijing (CN)
• YANG, Xiaolong
Beijing (CN)
• SONG, Shiyu
Sunnyvale, CA 94089 (US)

(74) Representative: J A Kemp LLP
14 South Square
Gray's Inn
London WC1R 5JJ (GB)

(54) **POSITIONING METHOD, ELECTRONIC DEVICE, VEHICLE DEVICE, AND AUTONOMOUS VEHICLE**

(57) Embodiments of the present disclosure provide a positioning method, an electronic device, a vehicle device, an autonomous vehicle and a storage medium, which relate to the field of automatic driving technology, where the method includes: acquiring navigation information respectively output by at least two Kalman filters, where each of the Kalman filters is connected to an inertial measurement unit, and fusing the multiple pieces of navigation information to obtain positioning information. By connecting one inertial measurement unit to one Kalman filter and fusing multiple pieces of navigation information acquired from the respective Kalman filters, it is possible to avoid the technical problems in the prior art where there is a large amount of calculations and efficiency is low when one Kalman filter is used to calculate relevant information output by multiple inertial measurement units, and achieve technical effects of reducing the amount of calculations of the respective Kalman filters and improving calculation efficiency. Moreover, because the respective Kalman filters operate in parallel, information interference can be reduced, thereby improving the technical effect of the reliability of the positioning information.

```
┌─────────────────────────────────────────────────────┐
│   Acquiring navigation information respectively        │───  S101
│       output by at least two Kalman filters            │
└─────────────────────────────────────────────────────┘
                          │
                          ▼
┌─────────────────────────────────────────────────────┐
│       Fusing the multiple pieces of navigation         │───  S102
│   information to obtain positioning information         │
└─────────────────────────────────────────────────────┘
```

FIG. 2

EP 3 842 750 A2

**Description**

**TECHNICAL FIELD**

The present disclosure relates to the field of computer technology, in particular, to the field of automatic driving technology and, specifically, to a positioning method, an electronic device, a vehicle device, an autonomous vehicle, and a storage medium.

**BACKGROUND**

An autonomous vehicle (Self-piloting automobile) is a kind of intelligent vehicle that realizes unmanned driving through a computer system, and positioning is one of important factors to ensure safe driving of autonomous vehicles.

In the prior art, the positioning method used mainly includes: providing two inertial measurement units (Inertial measurement unit, IMU), where both of the inertial measurement units are respectively connected to a Kalman filter; and outputting positioning information by the Kalman filter based on navigation solution information of the two inertial measurement units.

However, during implementation of the present disclosure, the inventor found that there are at least the following problems: determination of the positioning information by one Kalman filter according to the navigation solution information of the two inertial measurement units results in a large amount of calculations and large interference.

**SUMMARY**

According to one aspect of an embodiment of the present disclosure, an embodiment of the present disclosure provides a positioning method, including:

acquiring navigation information respectively output by at least two Kalman filters, where each of the Kalman filters is connected to an inertial measurement unit, and generating the navigation information according to data output by the connected inertial measurement unit; and
fusing the multiple pieces of navigation information to obtain positioning information.

In the embodiment of the present disclosure, by connecting one inertial measurement unit to one Kalman filter and fusing the multiple pieces of navigation information acquired from the respective Kalman filters, it is possible to avoid the technical problems in the prior art where there is a large amount of calculations and efficiency is low when one Kalman filter is used to calculate relevant information output by multiple inertial measurement units, and achieve technical effects of reducing the amount of calculations of the respective Kalman filters and improving calculation efficiency. Moreover, because the respective Kalman filters operate in parallel, information interference can be reduced, thereby improving the technical effect of the reliability of the positioning information.

In some embodiments, each piece of navigation information includes a timestamp and a covariance, and the fusing the multiple pieces of navigation information to obtain positioning information includes:

determining weights of the respective corresponding inertial measurement units according to timestamps and/or covariances of the respective pieces of navigation information; and
fusing the respective pieces of corresponding navigation information according to the respective weights to obtain the positioning information.

In the embodiments of the present disclosure, since accuracy and reliability of the respective pieces of navigation information are not necessarily the same, by determining weights of the inertial measurement units based on timestamps and/or covariances, and fusing the respective pieces of navigation information based on the weights, fusion flexibility and reliability may be achieved.

In some embodiments, the weights are inversely proportional to the covariances; and/or the weights are inversely proportional to time differences, where the time differences are absolute values of differences between the timestamps and a current time.

In some embodiments, if data output by any inertial measurement unit is lost and/or delayed, the fusing the multiple pieces of navigation information to obtain positioning information includes:

fusing the navigation information other than the navigation information output by the Kalman filter connected to the any inertial measurement unit to obtain the positioning information.

In the embodiments of the present disclosure, the respective pieces of navigation information is filtered, that is, navigation information output by an inertial measurement unit with data loss and/or delay is not considered, so as to achieve reliability of fusion, and thus obtain highly reliable positioning information.

In some embodiments, the navigation information is obtained by: the respective Kalman filters updating, based on acquired measurement data of a sensor, navigation solution information of the inertial measurement units connected to the respective Kalman filters.

In the embodiments of the present disclosure, by correcting respective pieces of navigation solution information through acquired measurement data of a sensor, accuracy of the navigation solution information may be improved, thereby further improving accuracy of the positioning information.

In some embodiments, if the multiple inertial measurement units include a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

In the embodiments of the present disclosure, by converting the navigation information of the respective inertial measurement units into navigation information of the same coordinate system to uniformly regulate the navigation information, accuracy of the positioning information is achieved.

In some embodiments, the sensor includes at least one of a radar sensor, a GPS, and an odometry sensor.

In some embodiments, each piece of navigation information includes a timestamp, a position, a speed, an attitude, a position standard deviation, a speed standard deviation, and an attitude standard deviation, the fusing multiple pieces of navigation information to obtain positioning information includes:

obtaining, upon calculation, a fused position according to respective timestamps, respective positions, respective position standard deviations and an acquired current time;

obtaining, upon calculation, a fused speed according to respective timestamps, respective speeds, respective speed standard deviations and the current time;

obtaining, upon calculation, a fused attitude according to respective timestamps, respective attitudes, respective attitude standard deviations and the current time;

obtaining, upon calculation, a fused position standard deviation according to respective timestamps, respective position standard deviations and the current time;

obtaining, upon calculation, a fused speed standard deviation according to respective timestamps, respective speed standard deviations and the current time; and

obtaining, upon calculation, a fused attitude standard deviation according to respective timestamps, respective attitude standard deviations and the current time.

According to one aspect of an embodiment of the present disclosure, an embodiment of the present disclosure provides a positioning apparatus, including:

an acquisition module, configured to acquire navigation information respectively output by at least two Kalman filters, where each of the Kalman filters is connected to an inertial measurement unit, and generate the navigation information according to data output by the connected inertial measurement unit; and

a fusion module, configured to fuse the multiple pieces of navigation information to obtain positioning information.

In some embodiments, each piece of navigation information includes a timestamp and a covariance, and the fusion module is configured to determine weights of the respective corresponding inertial measurement units according to timestamps and/or covariances of the respective pieces of navigation information, and fuse the respective pieces of corresponding navigation information according to the respective weights to obtain the positioning information.

In some embodiments, the weights are inversely proportional to the covariances; and/or
the weights are inversely proportional to time differences, where the time differences are absolute values of differences between the timestamps and a current time.

In some embodiments, if data output by any inertial measurement unit is lost and/or delayed, the fusion module is configured to fuse the navigation information other than the navigation information output by the Kalman filter connected to the any inertial measurement unit to obtain the positioning information.

In some embodiments, the navigation information is obtained by: the respective Kalman filters updating, based on acquired measurement data of a sensor, navigation solution information of the inertial measurement units connected to the respective Kalman filters.

In some embodiments, if the multiple inertial measurement units include a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

According to one aspect of the embodiments of the present disclosure, an embodiment of the present disclosure provides a computer program product, where the computer program product includes computer program instructions, where the computer program instructions are used to enable the computer to execute the method as described in any of the above embodiments.

Embodiments of the present disclosure provide a positioning method and apparatus, an electronic device, a vehicle device, an autonomous vehicle and a storage medium, including: acquiring navigation information respectively output by at least two Kalman filters, where each of the Kalman filters is connected to an inertial measurement unit, and fusing the multiple pieces of navigation information which is generated according to data output by the connected inertial measurement unit to obtain positioning information. By connecting one inertial measurement unit to one Kalman filter and fusing the multiple pieces of navigation information acquired from the respective Kalman filters, it is possible to avoid the technical problems in the prior art where there is a large amount of calculations and efficiency is low when one Kalman filter is used to calculate relevant information output by multiple inertial measurement units, and achieve technical effects of reducing the amount of calculations of the respective Kalman filters and improving calculation efficiency. Moreover, because the respective Kalman filters operate in parallel, information interference can be reduced, thereby improving the technical effect of the reliability of the positioning information.

Other effects possessed by the foregoing optional manners will be described below in conjunction with specific embodiments.

**BRIEF DESCRIPTION OF DRAWINGS**

The accompanying drawings are used to better understand the present invention and do not constitute a limitation of the present disclosure.

FIG. 1 is a schematic diagram of an application scenario of a positioning method according to an embodiment of the present disclosure;
FIG. 2 is a schematic flowchart of a positioning method according to an embodiment of the present disclosure;
FIG. 3 is a schematic diagram of a comparison between a solution in an embodiment of the present disclosure and a solution in the prior art;
FIG. 4 is a schematic flowchart of a method for fusing multiple pieces of navigation information to obtain positioning information according to an embodiment of the present disclosure;
FIG. 5 is a schematic diagram of a positioning apparatus according to an embodiment of the present disclosure;
FIG. 6 is a block diagram of an electronic device according to an embodiment of the present disclosure; and
FIG. 7 is a block diagram of an autonomous vehicle according to an embodiment of the present disclosure.

**DESCRIPTION OF EMBODIMENTS**

The following describes exemplary embodiments of the embodiments of the present disclosure with reference to the accompanying drawings, which includes various details of the embodiments of the present disclosure to facilitate understanding, and the described embodiments are merely exemplary. Therefore, persons of ordinary skill in the art should know that various changes and modifications can be made to the embodiments described herein without departing from the scope and spirit of the embodiments of the present disclosure. Also, for clarity and conciseness, descriptions of well-known functions and structures are omitted in the following description.

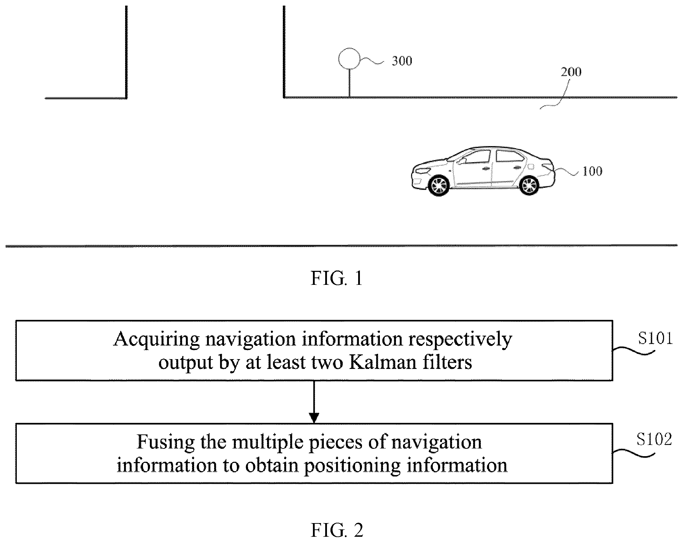

Reference may be made to FIG. 1 which is a schematic diagram of an application scenario of a positioning method according to an embodiment of the present disclosure.

As shown in FIG. 1, an autonomous vehicle 100 runs on a road 200, and is provided with two inertial measurement units (not shown in FIG. 1) and two Kalman filters (not shown in FIG. 1), where one Kalman filter is connected to one inertial measurement unit.

Of course, the autonomous vehicle 100 may also be provided with various sensors (not shown in FIG. 1), such as a radar sensor, a GPS, an odometry sensor, and so on.

As shown in FIG. 1, a sign 300 is also provided on the road 200, and the sign 300 can be used to indicate speed limit information.

To ensure driving safety of the autonomous vehicle 100, the autonomous vehicle 100 needs to be positioned to obtain positioning information, so that current driving information can be adaptively adjusted based on the positioning information. Among them, the current driving information includes but is not limited to speed, direction and acceleration.

For example, after the autonomous vehicle 100 is positioned and the positioning information is obtained, it can be known from the positioning information that the autonomous vehicle 100 has entered a speed limit area (such as an area corresponding to the speed limit information indicated by the sign 300), when the current speed of the autonomous vehicle 100 is greater than the speed corresponding to the speed limit information, the autonomous vehicle 100 is controlled to decelerate so that the decelerated speed is less than the speed corresponding to the speed limit information.

Technical solutions of the present disclosure and how to solve the above technical problem using the technical solutions of the present application will be discussed hereunder in detail with specific embodiments. The following specific embodiments may be combined with each other, and for identical or similar concepts or processes, details may not be repeated in some embodiments. The embodiments of the present disclosure will be described below in conjunction with the drawings.

According to one aspect of an embodiment of the present disclosure, an embodiment of the present disclosure provides a positioning method applied to the above application scenario.

Reference may be made to FIG. 2 which is a schematic flowchart of a positioning method according to an embodiment of the present disclosure.

As shown in FIG. 2, the method includes:
S101: Acquiring navigation information respectively output by at least two Kalman filters, where each of the Kalman filters is connected to an inertial measurement unit, and generating the navigation information according to data output by the connected inertial measurement unit.

The execution subject of the embodiment of the present disclosure may be a positioning apparatus. When the positioning method of the embodiment of the present disclosure is applied to the application scenario shown in FIG. 1, the apparatus may be a computer, a server, a vehicle terminal, a chip (such as an embedded chip), and so on.

The inertial measurement unit (Inertial measurement unit, IMU) is an apparatus that measures the three-axis attitude angle (or angular rate) and acceleration of an object. A gyroscope and an accelerometer are main elements of the inertial measurement unit, whose accuracy directly affects accuracy of an inertial system.

In some embodiments, an inertial measurement unit may include three single-axis accelerometers and three single-axis gyroscopes. The accelerometer detects an acceleration signal of an autonomous vehicle in independent three axes of a carrier coordinate system, while the gyroscope detects an angular velocity signal of a carrier relative to a navigation coordinate system, so that an angular velocity and an accelerated velocity of the autonomous vehicle in three-dimensional space are measured, and based on this, navigation solution information of the autonomous vehicle is solved, such as attitude, etc., it has very important application value in navigation.

For a specific solution process, reference may be made to the prior art, and details will not be described herein again.

It is worth noting that Kalman filtering is mainly divided into two steps: prediction and correction. The prediction aims to estimate a current state based on a state at a previous time, and the correction aims to perform a comprehensive analysis according to observation of the current state and estimation at the previous time, and estimate an optimal state value of the system, and then repeat this process at a next time. That is, the Kalman filter may generate navigation information based on relevant information sensed by the inertial measurement unit, and for calculation principles and specific calculation methods of the Kalman filter, reference may be made to the prior art, and details will not be described herein again.

In the embodiment of the present disclosure, the autonomous vehicle includes multiple Kalman filters, and one Kalman filter is connected to one inertial measurement unit.

That is to say, if the autonomous vehicle includes two Kalman filters, the autonomous vehicle also includes two inertial measurement units, and one Kalman filter is connected to one inertial measurement unit.

Based on the above analysis, it can be known that the Kalman filter may generate the navigation information based on data information of the inertial measurement unit connected to it. Therefore, in the embodiment of the present disclosure, the navigation information output by the two Kalman filters is acquired by a positioning apparatus.

S102: Fusing the multiple pieces of navigation information to obtain positioning information.

Since one Kalman filter outputs one piece of navigation information, after S101, multiple pieces of navigation information can be obtained. In this step, the multiple pieces of navigation information obtained through S101 can be fused to obtain positioning information of the autonomous vehicle.

Multiple methods can be used to fuse the multiple pieces of navigation information, such as the averaging method and the weighting method, etc. In the embodiment of the present disclosure, the fusing method is not limited.

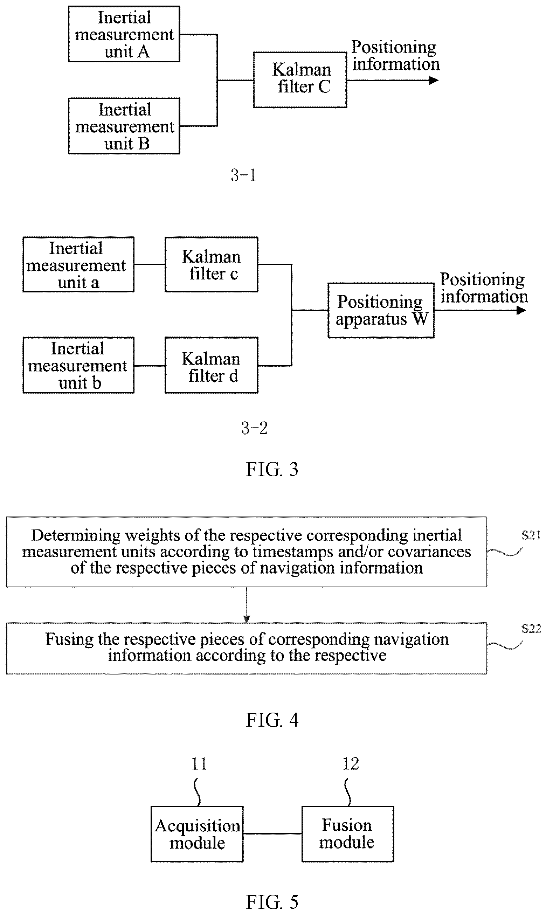

In order to enable readers to have a more thorough understanding of a solution in an embodiment of the present disclosure and to understand the difference between the solution in the embodiment of the present disclosure and the solution in the prior art, the solution in the embodiment of the present disclosure and the solution in the prior art are described in detail with reference to FIG. 3.

3-1 in FIG. 3 is the solution in the prior art. With reference to 3-1 in FIG. 3, it can be seen that, in the prior art, an autonomous vehicle may be provided with one Kalman filter and two inertial measurement units, respectively inertial measurement units A and B (the two inertial measurement units are exemplarily shown in the figure, the number can be one or more in practice). Both inertial measurement units are connected to a unique Kalman filter C, and both inertial measurement units send their own navigation solution information to the unique Kalman filter C. The unique Kalman filter C generates navigation information, and the navigation information can be determined as positioning information, or part of the navigation information can be selected from the navigation information to be used as positioning information.

3-2 in FIG. 3 is a solution in an embodiment of the present disclosure. With reference to 3-2 in FIG. 3, it can be seen that, in the embodiment of the present disclosure, an autonomous vehicle may be provided with two Kalman filters and respectively inertial measurement units a and b (the two Kalman filters are exemplarily shown in the figure, the number can be two or more in practice). Moreover, the autonomous vehicle are provided with two inertial measurement units and respectively Kalman filters c and d (similarly, the two inertial measurement units are exemplarily shown in the figure, the number can be two or more in practice, and the number of Kalman filters is the same as the number of inertial measurement units).

The inertial measurement unit a is connected to the Kalman filter c, and the inertial measurement unit b is connected to the Kalman filter d.

The inertial measurement unit a sends its corresponding navigation solution information to the Kalman filter c, and the inertial measurement unit b sends its corresponding navigation solution information to the Kalman filter d.

The Kalman filter c sends its corresponding navigation information c1 to a positioning apparatus W, and the Kalman filter d sends its corresponding navigation information d1 to the positioning apparatus W.

The positioning apparatus W fuses the navigation information c1 with the navigation information c2, and outputs positioning information.

Based on the above analysis, it can be seen that an embodiment of the present disclosure provides a positioning method, which includes: acquiring navigation information respectively output by at least two Kalman filters, where each of the Kalman filters is connected to an inertial measurement unit, and generating the navigation information according to data output by the connected inertial measurement unit, and fusing the multiple pieces of navigation information to obtain positioning information. By connecting one inertial measurement unit to one Kalman filter and fusing the multiple pieces of navigation information acquired from the respective Kalman filters, it is possible to avoid the technical problems in the prior art where there is a large amount of calculations and efficiency is low when one Kalman filter is used to calculate relevant information output by multiple inertial measurement units, and achieve technical effects of reducing the amount of calculations of the respective Kalman filters and improving calculation efficiency. Moreover, because the respective Kalman filters operate in parallel, information interference can be reduced, thereby improving the technical effect of the reliability of the positioning information.

With reference to FIG. 4, in some embodiments, each piece of navigation information includes a timestamp and a covariance, and the fusing the multiple pieces of navigation information to obtain positioning information includes: S21: Determining weights of the respective corresponding inertial measurement units according to timestamps and/or covariances of the respective pieces of navigation information.

It is understandable that the timestamp and/or the covariance can be extracted from the navigation information, and the covariance can specifically be a covariance in an estimated state.

This step may specifically include: extracting the timestamps for the respective pieces of navigation information from the respective pieces of navigation information, and determining weights of the inertial measurement units corresponding to the respective timestamps according to the respective timestamps.

Based on the above example, this step will be exemplarily described as follows: extracting a timestamp of navigation information c1, extracting a timestamp of navigation information d1, determining a weight of inertial measurement unit a according to the timestamp of the navigation information c1, and determining a weight of inertial measurement unit b according to the timestamp of the navigation information d1.

This step may also specifically include: extracting covariances of the respective pieces of navigation information from the respective pieces of navigation information, and determining weights of the inertial measurement units corresponding to the respective covariances according to the respective covariances.

Based on the above example, this step will be exemplarily described as follows: extracting a covariance of navigation information c1, extracting a covariance of navigation information d1, determining a weight of inertial measurement unit a according to the covariance of the navigation information c1, and determining a weight of inertial measurement unit b according to the covariance of the navigation information d1.

This step may also specifically include: extracting timestamps and covariances of the respective pieces of navigation information from the respective pieces of navigation information, and determining weights of the inertial measurement units corresponding to the respective timestamps and the respective covariances according to the respective timestamps and the respective covariances.

Based on the above example, this step will be exemplarily described as follows: extracting a timestamp and a covariance of navigation information c1, extracting a timestamp and a covariance of navigation information d1, determining a weight of inertial measurement unit a according to the timestamp and the covariance of the navigation information c1, and determining a weight of inertial measurement unit b according to the timestamp and the covariance of the navigation information d1.

In some embodiments, the weights are inversely proportional to the covariances. That is, the larger the covariances, the smaller the weights; the smaller the covariances, the larger the weights.

In some embodiments, the weights are inversely proportional to time differences, where the time differences are absolute values of differences between the timestamps and a current time. That is, the greater the time differences, the smaller the weights; the smaller the time differences, the greater the weights.

The weights can be used to characterize reliability of the navigation information.

For example, if a time difference is smaller, it means the closer a timestamp is to the current time and the smaller an error of navigation information is, so the greater a weight assigned to the navigation information is.

S22: Fusing the respective pieces of corresponding navigation information according to the respective weights to obtain the positioning information.

In this step, the respective pieces of navigation information is fused in combination with the weights. Since the weights can be used to reflect reliability of the navigation information, fusion of the navigation information based on the weights can make the positioning information more accurate and reliable.

In some embodiments, if data output by any inertial measurement unit is lost and/or delayed, the fusing the multiple pieces of navigation information to obtain positioning information includes:

Fusing the navigation information other than the navigation information output by the Kalman filter connected to the any inertial measurement unit to obtain the positioning information.

Based on the above example, this step will be exemplarily described as follows: if data output by inertial measurement unit a is lost and/or delayed, the positioning information is determined according to the navigation information d1 output by Kalman filter d.

For another example, if there are three Kalman filters and three inertial measurement units, each Kalman filter is connected to an inertial measurement unit, if data output by one of the inertial measurement units is lost and/or delayed, then two pieces of navigation information output by Kalman filters connected to the other two inertial measurement units are fused to obtain the positioning information.

That is to say, in an embodiment of the present disclosure, if data output by part of inertial measurement units is lost and/or delayed, navigation information output by Kalman filters corresponding to the part of inertial measurement units is no longer considered, instead, navigation information output by Kalman filters corresponding to the other inertial measurement units are fused to obtain the positioning information.

In an embodiment of the present disclosure, separately independent Kalman filters process relevant information of respectively connected inertial measurement units, and the respective Kalman filters do not affect each other, when one of the Kalman filters is disabled, the other Kalman filters may continue to operate normally, thus effectively enhancing positioning robustness.

In some other embodiments, if an inertial measurement unit having data loss and/or delay returns to normal, the fused multiple pieces of navigation information includes navigation information output by a Kalman filter corresponding to the inertial measurement unit that has returned to normal.

In some embodiments, the navigation information is obtained by: the respective Kalman filters updating, based on acquired measurement data of a sensor, navigation solution information of the inertial measurement units connected to the respective Kalman filters.

That is to say, a Kalman filter acquires navigation solution information from an inertial measurement unit, and acquires measurement data of a sensor, and corrects the navigation solution information based on the measurement data to obtain the navigation information.

Through the method in the embodiment of the present disclosure, accuracy and reliability of the navigation information can be improved, thereby achieving the technical effects of improving accuracy and reliability of the positioning information.

The sensor includes at least one of a radar sensor, a GPS, and an odometry sensor.

In some embodiments, if the multiple inertial measurement units include a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

The master inertial measurement unit is selected from the multiple inertial measurement units based on requirements, experience and experiments.

In some embodiments, each piece of navigation information includes a timestamp, a position, a speed, an attitude, a position standard deviation, a speed standard deviation, and an attitude standard deviation, the fusing multiple pieces of navigation information to obtain positioning information includes:

>   obtaining, upon calculation, a fused position according to respective timestamps, respective positions, respective position standard deviations and an acquired current time;
>   obtaining, upon calculation, a fused speed according to respective timestamps, respective speeds, respective speed standard deviations and the current time;
>   obtaining, upon calculation, a fused attitude according to respective timestamps, respective attitudes, respective attitude standard deviations and the current time;

obtaining, upon calculation, a fused position standard deviation according to respective timestamps, respective position standard deviations and the current time;

obtaining, upon calculation, a fused speed standard deviation according to respective timestamps, respective speed standard deviations and the current time; and

obtaining, upon calculation, a fused attitude standard deviation according to respective timestamps, respective attitude standard deviations and the current time.

Based on the above embodiments, it can be known that when the respective pieces of navigation information is fused, such fusion can be implemented based on the weights of the respective inertial measurement units. Now an example is taken by using two Kalman filters and weights of two inertial measurement units being respectively 0.5 (that is, 1/2), fusion of two pieces of navigation information (navigation information c1 and navigation information c2) is elaborated in combination with formula as follows:

Determining fused position $X_F$ according to Formula 1, Formula 1:

$$X_F = \frac{1}{2}\left( \frac{T-t_1}{2T-(t_1+t_2)}X_1 + \frac{T-t_2}{2T-(t_1+t_2)}X_2 \right) + \frac{1}{2}\left( \frac{\Delta x_2}{\Delta x_1 + \Delta x_2}X_1 + \frac{\Delta x_1}{\Delta x_1 + \Delta x_2}X_2 \right)$$

Determining fused speed $V_F$ according to Formula 2, Formula 2:

$$V_F = \frac{1}{2}\left( \frac{T-t_1}{2T-(t_1+t_2)}V_1 + \frac{T-t_2}{2T-(t_1+t_2)}V_2 \right) + \frac{1}{2}\left( \frac{\Delta v_2}{\Delta v_1 + \Delta v_2}V_1 + \frac{\Delta v_1}{\Delta v_1 + \Delta v_2}V_2 \right)$$

Determining fused attitude $\phi_F$ according to Formula 3, Formula 3:

$$\phi_F = \frac{1}{2}\left( \frac{T-t_1}{2T-(t_1+t_2)}\phi_1 + \frac{T-t_2}{2T-(t_1+t_2)}\phi_2 \right) + \frac{1}{2}\left( \frac{\Delta \phi_2}{\Delta \phi_1 + \Delta \phi_2}\phi_1 + \frac{\Delta \phi_1}{\Delta \phi_1 + \Delta \phi_2}\phi_2 \right)$$

Determining fused position standard deviation $\Delta x_F$ according to Formula 4, Formula 4:

$$\Delta x_F = \frac{1}{2}\left( \frac{T-t_1}{2T-(t_1+t_2)}\Delta x_1 + \frac{T-t_2}{2T-(t_1+t_2)}\Delta x_2 \right) + \frac{1}{2}\left( \frac{\Delta x_2}{\Delta x_1 + \Delta x_2}\Delta x_1 + \frac{\Delta x_1}{\Delta x_1 + \Delta x_2}\Delta x_2 \right)$$

Determining fused speed standard deviation $\Delta v_F$ according to Formula 5, Formula 5:

$$\Delta v_F = \frac{1}{2}\left( \frac{T-t_1}{2T-(t_1+t_2)}\Delta v_1 + \frac{T-t_2}{2T-(t_1+t_2)}\Delta v_2 \right) + \frac{1}{2}\left( \frac{\Delta v_2}{\Delta v_1 + \Delta v_2}\Delta v_1 + \frac{\Delta v_1}{\Delta v_1 + \Delta v_2}\Delta v_2 \right)$$

Determining fused attitude standard deviation $\Delta \phi_F$ according to Formula 6, Formula 6:

$$\Delta \phi_F = \frac{1}{2}\left( \frac{T-t_1}{2T-(t_1+t_2)}\Delta \phi_1 + \frac{T-t_2}{2T-(t_1+t_2)}\Delta \phi_2 \right) + \frac{1}{2}\left( \frac{\Delta \phi_2}{\Delta \phi_1 + \Delta \phi_2}\Delta \phi_1 + \frac{\Delta \phi_1}{\Delta \phi_1 + \Delta \phi_2}\Delta \phi_2 \right)$$

Among them, T represents a current time, $t_1$ represents a timestamp of the navigation information c1, $X_1$ represents a position of the navigation information c1, $V_1$ represents a speed of the navigation information c1, $\phi_1$ represents an attitude of the navigation information c1, $\Delta x_1$ represents a position standard deviation of the navigation information c1, $\Delta v_1$ represents a speed standard deviation of the navigation information c1, $\Delta \phi_1$ represents an attitude

standard deviation of the navigation information c1, $t_2$ represents a timestamp of the navigation information d1, $X_2$ represents a position of the navigation information d1, $V_2$ represents a speed of the navigation information d1, $\phi_2$ represents an attitude of the navigation information d1, $\Delta x_2$ represents a position standard deviation of the navigation information d1, $\Delta v_2$ represents a speed standard deviation of the navigation information d1, $\Delta\phi_2$ represents an attitude standard deviation of the navigation information d1.

According to another aspect of an embodiment of the present disclosure, an embodiment of the present disclosure further provides a positioning apparatus.

Reference may be made to FIG. 5 which is a schematic diagram of a positioning apparatus according to an embodiment of the present disclosure.

As shown in FIG. 5, the apparatus includes:

an acquisition module 11, configured to acquire navigation information respectively output by at least two Kalman filters, where each of the Kalman filters is connected to an inertial measurement unit, and generate the navigation information according to data output by the connected inertial measurement unit; and

a fusion module 12, configured to fuse the multiple pieces of navigation information to obtain positioning information.

In some embodiments, each piece of navigation information includes a timestamp and a covariance, and the fusion module 12 is configured to determine weights of the respective corresponding inertial measurement units according to timestamps and/or covariances of the respective pieces of navigation information, and fuse the respective pieces of corresponding navigation information according to the respective weights to obtain the positioning information.

In some embodiments, the weights are inversely proportional to the covariances; and/or, the weights are inversely proportional to time differences, where the time differences are absolute values of differences between the timestamps and a current time.

In some embodiments, if data output by any inertial measurement unit is lost and/or delayed, the fusion module 12 is configured to fuse the navigation information other than the navigation information output by the Kalman filter connected to the any inertial measurement unit to obtain the positioning information.

In some embodiments, the navigation information is obtained by: the respective Kalman filters updating, based on acquired measurement data of a sensor, navigation solution information of the inertial measurement units connected to the respective Kalman filters.

In some embodiments, if the multiple inertial measurement units include a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

In some embodiments, the sensor includes at least one of a radar sensor, a GPS, and an odometry sensor.

In some embodiments, each piece of navigation information includes a timestamp, a position, a speed, an attitude, a position standard deviation, a speed standard deviation, and an attitude standard deviation, the fusion module 12 is configured to obtain, upon calculation, a fused position according to respective timestamps, respective positions, respective position standard deviations and an acquired current time; obtain, upon calculation, a fused speed according to respective timestamps, respective speeds, respective speed standard deviations and the current time; obtain, upon calculation, a fused attitude according to respective timestamps, respective attitudes, respective attitude standard deviations and the current time; obtain, upon calculation, a fused position standard deviation according to respective timestamps, respective position standard deviations and the current time; obtain, upon calculation, a fused speed standard deviation according to respective timestamps, respective speed standard deviations and the current time; and obtain, upon calculation, a fused attitude standard deviation according to respective timestamps, respective attitude standard deviations and the current time.

According to an embodiment of the present disclosure, the present disclosure also provides an electronic device and a readable storage medium.

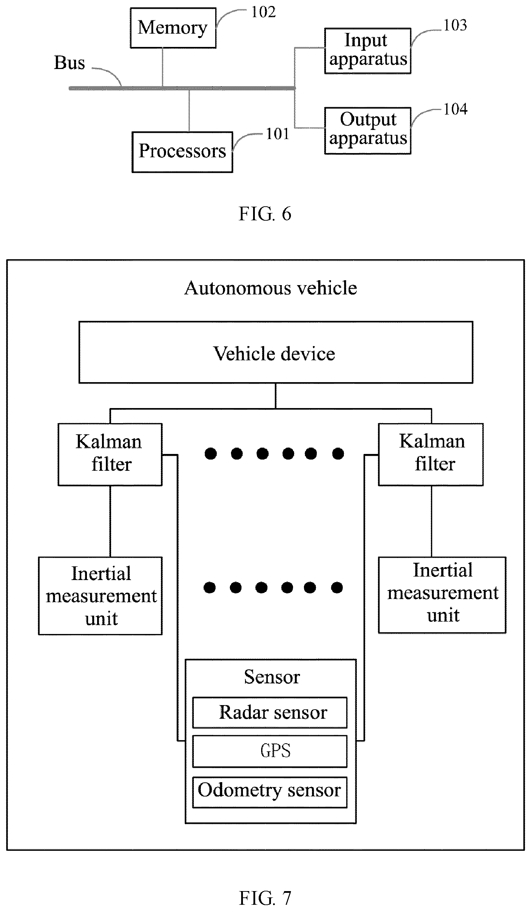

As shown in FIG. 6, FIG. 6 is a block diagram of an electronic device according to an embodiment of the present disclosure. The electronic device is intended to represent various forms of digital computers, such as a laptop computer, a desktop computer, a workbench, a personal digital assistant, a server, a blade server, a mainframe computer, and other suitable computers. The electronic device can also represent various forms of mobile apparatus, such as a personal digital assistant (Personal digital assistant, PDA), a cellular phone, a smart phone, a wearable device, and other similar computing apparatus. The components, their connections and relationships, and their functions herein are merely examples, and are not intended to limit the implementation of the embodiments of the present disclosure described and/or claimed herein.

As shown in FIG. 6, the electronic device includes: one or more processors 101, memories 102, and interfaces for connecting various components, including high-speed interfaces and low-speed interfaces. The components are connected to each other with different buses and can be installed on a common main board or in other ways as needed.

The processor may process instructions executed within the electronic device, including instructions stored in or on the memory to display graphical information of GUI on an external input/output device (such as a display device coupled to the interface). In other embodiments, if required, multiple processors and/or buses can be used with multiple memories. Similarly, multiple electronic devices can be connected, and each device provides some necessary operations (for example, as a server array, a group of blade servers, or a multi-processor system). In FIG. 6, one processor 101 is taken as an example.

The memory 102 is a non-transitory computer readable storage medium provided in an embodiment of the present disclosure where the memory is stored with instructions executable by at least one processor, so that the at least one processor executes the positioning method provided in the embodiment of the present disclosure. The non-transitory computer readable storage medium of the embodiment of the present disclosure is stored with computer instructions, the computer instructions are used to enable a computer to execute the positioning method provided in the embodiment of the present disclosure.

The memory 102 acting as a non-transitory computer-readable storage medium can be used to store a non-transitory software program, a non-transitory computer executable program and module, such as program instructions/a module corresponding to the positioning in the embodiment of the present disclosure. The processor 101 executes various functional applications and data processing of the server by running the non-transitory software program, the instructions, and the module stored in the memory 102, that is, implementing the positioning method in the foregoing method embodiments.

The memory 102 may include a program storage area and a data storage area, where the program storage area may be stored with an application program required by an operating system and at least one function; the data storage area may be stored with data created according to the use of electronic device, and so on. In addition, the memory 102 may include a high-speed random access memory or a non-transitory memory, such as at least one magnetic disk storage device, a flash memory device, or other non-transitory solid-state storage devices. In some embodiments, the memory 102 optionally includes memories remotely provided with respect to the processor 101, and these remote memories may be connected to the electronic device through a network. Examples of the above network include, but are not limited to, Internet, an Intranet, a Local Area Network, a Block-chain-based Service Network (Block-chain-based Service Network, BSN), a mobile communication network, and a combination of them.

The electronic device may further include: an input apparatus 103 and an output apparatus 104. The processor 101, the memory 102, the input apparatus 103, and the output apparatus 104 may be connected through a bus or in other ways. In FIG. 6, connection through a bus is used as an example.

The input apparatus 103 can receive input digital or character information, and generate a key signal input related to user settings and function control of the electronic device, such as a touch screen, a keypad, a mouse, a track pad, a touch panel, an indicator stick, one or more mouse buttons, a trackball, a joystick and other input apparatus. The output apparatus 104 may include a display device, an auxiliary lighting apparatus (such as an LED), a tactile feedback apparatus (such as a vibration motor), and so on. The display device may include, but is not limited to, a liquid crystal display (Liquid crystal display, LCD), a light emitting diode (Light emitting diode, LED) display, and a plasma display. In some embodiments, the display device may be a touch screen.

Various embodiments of the systems and techniques described herein may be implemented in a digital electronic circuitry, an integrated circuit system, a special-purpose ASIC (application-specific integrated circuit), computer hardware, firmware, software, and/or a combination of them. These various embodiments may include: implementations in one or more computer programs which may be executed and/or interpreted on a programmable system including at least one programmable processor. The programmable processor may be a special-purpose or general programmable processor, and may receive data and instructions from a storage system, at least one input apparatus, and at least one output apparatus, and transmit the data and instructions to the storage system, the at least one input apparatus, and the at least one output apparatus.

These computer programs (also known as programs, software, software applications, or codes) include machine instructions of the programmable processor, moreover, these computer programs may be implemented with a high-level process and/or an object-oriented programming language, and/or an assembly/machine language. As used herein, the terms "machine-readable medium" and "computer-readable medium" refer to any computer program product, device, and/or apparatus (for example, a magnetic disk, an optical disk, a memory, a programmable logic device (Programmable logic device, PLD)) used to provide machine instructions and/or data to the programmable processor, including the machine-readable medium that receives machine instructions as a machine-readable signal. The term "machine-readable signal" refers to any signal used to provide machine instructions and/or data to the programmable processor.

In order to provide interaction with users, the systems and techniques described herein may be implemented on a computer, where the computer has: a display apparatus (for example, a cathode ray tube (cathode ray tube, CRT) or an LCD monitor) for displaying information to users; and a keyboard and a pointing apparatus (for example, a mouse or a trackball) though which users may provide input to the computer. Other types of apparatus may also be used to: provide interaction with users; for example, the feedback provided to users may be any form of sensing feedback (for example, visual feedback, audible feedback, or tactile feedback); and the input from users may be received in any form (including sound input, voice input, or tactile input).

The systems and techniques described herein may be implemented in a computing system that includes back end components (for example, as a data server), or a computing system that includes middleware components (for example, an application server), or a computing system that includes front end components (for example, a user computer with a graphical user interface or a web browser, through which the user can interact with the implementations of the systems and techniques described herein), or a computing system that includes any combination of such back end component, middleware component, or front end component. The components of the system may be connected to each other by any form or medium of digital data communication (for example, a communication network). Examples of the communication network include: a Local Area Network (Local Area Network, LAN), a Block-chain-based Service Network (Block-chain-based Service Network, BSN), a Wide Area Network (Wide Area Network, WAN), and Internet.

A computing system may include a client and a server. The client and the server are generally far from each other and usually perform interactions through a communication network. A relationship between the client and the server is generated by a computer program running on a corresponding computer and having a client-server relationship.

According to another aspect of an embodiment of the present disclosure, an embodiment of the present disclosure further provides a vehicle device, where the vehicle device includes the apparatus as described in any of the above embodiments, or the electronic device as described in the above embodiments.

According to another aspect of an embodiment of the present disclosure, an embodiment of the present disclosure further provides an autonomous vehicle.

Reference may be made to FIG. 7 which is a block diagram of an autonomous vehicle according to an embodiment of the present disclosure.

As shown in FIG. 7, the autonomous vehicle includes the vehicle device as described in the above embodiments, and further includes multiple Kalman filters and multiple inertial measurement units, where one of the Kalman filters is connected to one of the inertial measurement units, and each of the Kalman filters is connected to the vehicle device.

With reference to FIG. 7, it can be seen that, in some embodiments, the autonomous vehicle further includes a sensor, such as a radar sensor, a GPS, an odometry sensor shown in FIG. 7.

According to another aspect of an embodiment of the present disclosure, an embodiment of the present disclosure further provides a computer program product, where the computer program product includes computer program instructions, where the computer program instructions are used to enable the computer to execute the method as described in any of the above embodiments.

It should be understood that various forms of processes shown above can be used, and steps may be reordered, added, or deleted. For example, the steps described in this disclosure may be performed in parallel or sequentially or in different orders. As long as desired results of the technical solutions of the present disclosure can be achieved, no limitation is made herein.

The above specific embodiments do not constitute a limitation to the protection scope of the present disclosure. Persons skilled in the art should know that various modifications, combinations, sub-combinations and substitutions can be made according to design requirements and other factors. Any modification, equivalent replacement and improvement made within the spirit and principle of this disclosure shall be included in the protection scope of this disclosure.

**Claims**

1. A positioning method, comprising:

    acquiring (101) navigation information respectively output by at least two Kalman filters, wherein each of the Kalman filters is connected to an inertial measurement unit, and generating the navigation information according to data output by the connected inertial measurement unit; and
    fusing (102) the multiple pieces of navigation information to obtain positioning information.

2. The method according to claim 1, wherein each piece of navigation information comprises a timestamp and a covariance, and the fusing the multiple pieces of navigation information to obtain positioning information comprises:

    determining (21) weights of the respective corresponding inertial measurement units according to timestamps and/or covariances of the respective pieces of navigation information; and
    fusing (22) the respective pieces of corresponding navigation information according to the respective weights to obtain the positioning information.

3. The method according to claim 2, wherein the weights are inversely proportional to the covariances; and/or

the weights are inversely proportional to time differences, wherein the time differences are absolute values of differences between the timestamps and a current time.

4. The method according to any one of claims 1 to 3, wherein if data output by any inertial measurement unit is lost and/or delayed, the fusing (102) the multiple pieces of navigation information to obtain positioning information comprises:
fusing the navigation information other than the navigation information output by the Kalman filter connected to the any inertial measurement unit to obtain the positioning information.

5. The method according to any one of claims 1 to 4, wherein the navigation information is obtained by: the respective Kalman filters updating, based on acquired measurement data of a sensor, navigation solution information of the inertial measurement units connected to the respective Kalman filters.

6. The method according to claim 5, wherein if the multiple inertial measurement units comprise a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

7. The method according to claim 5 or 6, wherein the sensor comprises at least one of a radar sensor, a Global Positioning System, GPS, and an odometry sensor.

8. The method according to any one of claims 1 to 7, wherein each piece of navigation information comprises a timestamp, a position, a speed, an attitude, a position standard deviation, a speed standard deviation, and an attitude standard deviation, the fusing multiple pieces of navigation information to obtain positioning information comprises:

obtaining, upon calculation, a fused position according to respective timestamps, respective positions, respective position standard deviations and an acquired current time;
obtaining, upon calculation, a fused speed according to respective timestamps, respective speeds, respective speed standard deviations and the current time;
obtaining, upon calculation, a fused attitude according to respective timestamps, respective attitudes, respective attitude standard deviations and the current time;
obtaining, upon calculation, a fused position standard deviation according to respective timestamps, respective position standard deviations and the current time;
obtaining, upon calculation, a fused speed standard deviation according to respective timestamps, respective speed standard deviations and the current time; and
obtaining, upon calculation, a fused attitude standard deviation according to respective timestamps, respective attitude standard deviations and the current time.

9. A positioning apparatus, comprising:

an acquisition module (11), configured to acquire navigation information respectively output by at least two Kalman filters, wherein each of the Kalman filters is connected to an inertial measurement unit, and generate the navigation information according to data output by the connected inertial measurement unit; and
a fusion module (12), configured to fuse the multiple pieces of navigation information to obtain positioning information.

10. The apparatus according to claim 9, wherein each piece of navigation information comprises a timestamp and a covariance, and the fusion module (12) is configured to determine weights of the respective corresponding inertial measurement units according to timestamps and/or covariances of the respective pieces of navigation information, and fuse the respective pieces of corresponding navigation information according to the respective weights to obtain the positioning information.

11. The apparatus according to claim 10, wherein the weights are inversely proportional to the covariances; and/or, the weights are inversely proportional to time differences, wherein the time differences are absolute values of differences between the timestamps and a current time.

12. The apparatus according to any one of claims 9 to 11, wherein if data output by any inertial measurement unit is lost and/or delayed, the fusion module (12) is configured to fuse the navigation information other than the navigation information output by the Kalman filter connected to the any inertial measurement unit to obtain the positioning information.

13. The apparatus according to any one of claims 9 to 12, wherein the navigation information is obtained by: the respective Kalman filters updating, based on acquired measurement data of a sensor, navigation solution information of the inertial measurement units connected to the respective Kalman filters.

14. The apparatus according to claim 13, wherein if the multiple inertial measurement units comprise a master inertial measurement unit, navigation solution information of a non-master inertial measurement unit is obtained by: the non-master inertial measurement unit performing, based on the master inertial measurement unit, coordinate conversion on the acquired navigation information, and performing attitude solution.

15. A computer program product, comprising computer program instructions, wherein the computer program instructions enable a computer to execute the method according to any one of claims 1 to 8.

FIG. 1

| Acquiring navigation information respectively output by at least two Kalman filters | S101 |
|---|---|

| Fusing the multiple pieces of navigation information to obtain positioning information | S102 |

FIG. 2

Inertial
measurement
unit A

Inertial
measurement
unit B

Kalman
filter C

Positioning
information

3-1

Inertial
measurement
unit a

Kalman
filter c

Inertial
measurement
unit b

Kalman
filter d

Positioning
apparatus W

Positioning
information

3-2

FIG. 3

Determining weights of the respective corresponding inertial
measurement units according to timestamps and/or covariances
of the respective pieces of navigation information

S21

Fusing the respective pieces of corresponding navigation
information according to the respective

S22

FIG. 4

11

12

Acquisition
module

Fusion
module

FIG. 5

Memory —102

Bus

Input apparatus —103

Processors —101

Output apparatus —104

FIG. 6

Autonomous vehicle

Vehicle device

Kalman filter

● ● ● ● ● ●

Kalman filter

Inertial measurement unit

● ● ● ● ●

Inertial measurement unit

Sensor

Radar sensor

GPS

Odometry sensor

FIG. 7